# FASCICULE DE BREVET EUROPEEN

(11) **EP 4 199 312 B1**
(45) Date de publication et mention de la délivrance du brevet: **06.05.2026**
(21) Numéro de dépôt: 22211512.3
(22) Date de dépôt: 05.12.2022
(51) Int. Cl.: H02K 1/32, H02K 3/02, H02K 3/18, H02K 3/52, H02K 3/24, H02K 9/197, H02K 3/487

(54) **ROTOR BOBINÉ EN FEUILLARD POUR MACHINES ÉLECTRIQUES**
FOLIENGEWICKELTER ROTOR FÜR ELEKTRISCHE MASCHINEN
FOIL-WOUND ROTOR FOR ELECTRIC MACHINES

(30) Priorité: 15.12.2021 FR 2113561
(43) Date de publication de la demande: 21.06.2023
(73) Titulaire: Safran Electrical & Power, 31700 Blagnac (FR)
(72) Inventeur: TOUZET, Eric, 78400 CHATOU (FR); GERMAIN, Fabrice, 78400 CHATOU (FR); BOUTON, Mathieu, 78400 CHATOU (FR); LOUVIOT, Rémi, 78400 CHATOU (FR); DUMONT, Philippe, 78400 CHATOU (FR); STRIM, Sébastien, 78400 CHATOU (FR)
(74) Mandataire: Atout PI Laplace

(56) Documents cités:
- EP-A1- 3 509 193
- DE-A1- 102009 008 405
- DE-A1- 102017 213 960
- DE-A1- 2 303 041
- DE-A1- 2 826 607
- GB-A- 1 046 145
- JP-A- S57 135 649
- US-A1- 2016 204 663
- US-A1- 2016 344 269

## Description

L'invention concerne le domaine du bobinage des rotors et plus particulièrement le bobinage des rotors multi-pôles comprenant quatre pôles. Plus précisément, l'invention a trait à un enroulement de conducteurs dans un matériau innovant permettant un gain de masse. Cette problématique de gain de masse est particulièrement intéressante pour le domaine des machines électriques tournantes avionnées où la masse est un réel enjeu. Néanmoins, l'invention peut être applicable dans tout domaine des machines électriques tournantes où le gain de masse de la machine est ciblé. L'invention a également trait à un dispositif de refroidissement du bobinage des rotors selon l'invention améliorant l'extraction thermique en provenance du bobinage des rotors.

Les machines électriques tournantes comportent généralement un stator et un rotor couplés électromagnétiquement, le rotor étant entraîné en rotation par l'intermédiaire du stator immobile. Le rotor peut comprendre un ou plusieurs pôles s'étendant radialement par rapport au rotor et peut comprendre un ou plusieurs enroulements de bobine montés sur le pôle de rotor.

Les enroulements de bobine en cuivre sont couramment utilisés dans les rotors des machines électriques synchrones. En effet, les caractéristiques physiques du cuivre, et particulièrement sa faible résistance électrique en font un excellent conducteur électrique dans le cas d'induction électrique d'une machine électrique tournante. Dès lors, les enroulements de cuivre prennent la forme de fins fils de cuivre s'enroulant autour de chaque pôle de sorte à générer des spires.

Néanmoins, la masse actuelle des conducteurs en fils de cuivre émaillés est pénalisante pour des rotors à pôles saillants haute vitesse. En effet, les rotors bobinés avec du fil de cuivre limite, de par leur masse, les vitesses de rotor limitant ainsi les performances électriques des alternateurs et moteurs. Or, pour des machines électriques avionnées, l'augmentation de masse pour augmenter la puissance est coûteuse et problématique, puisque cette augmentation de masse limite la vitesse de rotation, permettant également d'optimiser le rendement.

De plus, la résistance électrique des enroulements en cuivre (bien que faible par les mesures conventionnelles) est suffisante pour contribuer à un échauffement substantiel du rotor et diminuer le rendement énergétique de la machine. Or, rechercher l'allègement des enroulements autour des pôles pour induire une augmentation de la vitesse de rotation du rotor et donc une augmentation de l'induction électrique amène également à une augmentation de l'échauffement subi par l'enroulement.

Des documents traitent ainsi du problème de la gestion thermique dans le rotor comme par exemple les documents DE 28 26 607 A1, GB 1 046 145 A ou encore EP 3 509 193 A1 sans pour autant déterminer une solution présentant des caractéristiques suffisantes en termes d'évacuation de la chaleur.

L'invention vise à pallier tout ou partie des problèmes cités plus haut en proposant un remplacement de l'enroulement en cuivre par un feuillard aluminium oxydé permettant d'alléger le pôle et donc le rotor et d'avoir un meilleur remplissage du pôle par l'absence d'espace entre chaque couche du conducteur. En outre, la surface d'échange thermique entre spires est plus grande avec du feuillard, comportant une surface planaire, qu'avec du fil. L'invention propose également une cale ayant la forme d'un vé permettant l'extraction de chaleur en provenance des enroulements de feuillard.

A cet effet, l'invention a pour objet un rotor de machine électrique tournante selon la revendication 1.
Le rotor comprend notamment :
- une pluralité de pôles s'étendant chacun selon un premier axe radial par rapport au rotor et selon un deuxième axe parallèle au rotor par rapport au rotor, chaque pôle comprenant un corps de pôle,
- un enroulement de rotor par pôle, positionné contre le corps du pôle, l'enroulement de rotor prenant la forme d'un feuillard s'étendant sur la longueur dudit corps de pôle selon le premier axe radial enroulé contre le corps de pôle,
- une pluralité de cales de fermeture, une cale de fermeture de la pluralité de cales de fermeture étant en contact avec un enroulement de rotor associé
- à un corps de pôle, ladite cale de fermeture étant configurée pour exercer une pression sur ledit enroulement de rotor en direction dudit corps de pôle.

Selon un aspect de l'invention, l'enroulement de rotor est un feuillard d'aluminium oxydé.

Selon un aspect de l'invention, l'enroulement de rotor est un feuillard de cuivre.

Selon un aspect de l'invention, la cale de fermeture est un vé s'étendant selon deux plans sécants dont un premier plan des deux plans est en contact avec l'enroulement de rotor d'un premier pôle de la pluralité de pôles et dont un deuxième plan des deux plans est en contact avec l'enroulement de rotor d'un deuxième pôle de la pluralité de pôle, le deuxième pôle étant adjacent au premier pôle.

Selon un aspect de l'invention, le vé comprend une ouverture d'entrée positionnée selon une première extrémité du vé le long du deuxième axe, une première ouverture d'évacuation positionnée selon une deuxième extrémité du vé le long du deuxième axe, différente de la première extrémité et une deuxième ouverture d'évacuation positionnée selon la deuxième extrémité du vé le long du deuxième axe, l'ouverture d'entrée étant reliée à la première ouverture d'évacuation et à la deuxième ouverture d'évacuation selon un réseau de conduit.

Selon un aspect de l'invention, le réseau de conduit prend successivement une forme de droite et une forme de courbe.

L'invention a également trait à une machine électrique tournante, comprenant le rotor, l'enroulement de rotor du pôle étant relié électriquement à une source d'alimentation électrique, par l'intermédiaire de liaisons électriques, les liaisons électriques étant obtenues par soudage par pression à froid, soudage par friction-malaxage, brasage par pression ou soudage par pression, la source d'alimentation électrique étant en cuivre.

L'invention sera mieux comprise et d'autres avantages apparaîtront à la lecture de la description détaillée d'un mode de réalisation donné à titre d'exemple, description illustrée par le dessin joint dans lequel :
[Fig.1] la figure 1 représente une vue schématique en coupe d'un rotor de machine électrique tournante selon l'invention ;
[Fig.2] la figure 2 représente une vue schématique d'une cale de fermeture selon l'invention ;
[Fig.3] la figure 3 représente une vue schématique de la structure interne de la cale de fermeture de la figure 2 ;
[Fig.4] la figure 4 représente une connexion électrique entre un enroulement du pôle et un équipement électrique d'un stator d'une machine électrique tournante ;

Par souci de clarté, les mêmes éléments porteront les mêmes repères dans les différentes figures.

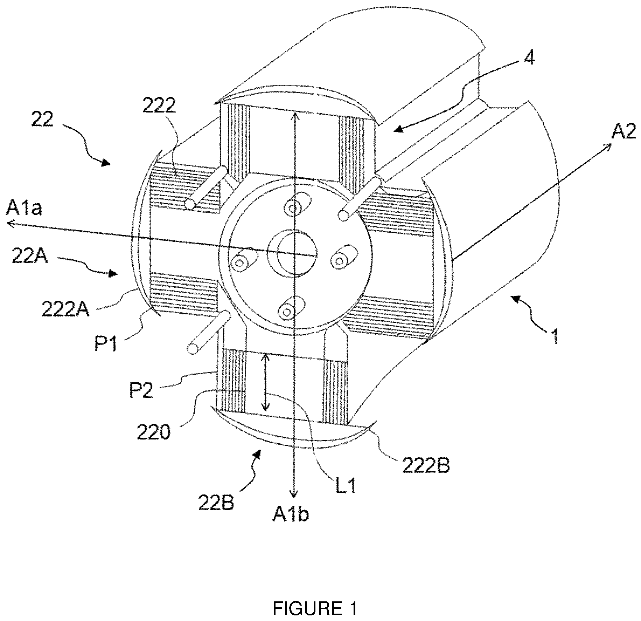

La figure 1 représente une vue schématique en coupe d'un rotor 1 de machine électrique tournante selon l'invention. Le rotor 1 de machine électrique tournante comprend une pluralité de pôles 22, et préférentiellement quatre pôles 22, s'étendant chacun selon un premier axe A1 radial par rapport au rotor 1, et plus précisément par rapport à un axe de rotation du rotor 1, et selon un deuxième axe A2 parallèle au rotor 1 par rapport au rotor 1, et plus précisément par rapport à l'axe de rotation du rotor 1. Autrement dit le pôle 22A s'étend selon l'axe A1a et le pôle 22B s'étend selon l'axe A1b. Chaque pôle 22 comprend un corps de pôle 220 s'étendant selon le premier axe A1 et le deuxième axe A2, et un enroulement 222 de rotor par pôle 22, positionné contre le corps 220 du pôle 22. L'enroulement 222 de rotor prend la forme d'un feuillard s'étendant sur la longueur L dudit corps 220 de pôle selon le premier axe A1 radial enroulé contre le corps 220 de pôle 22. Par pôle de rotor, le feuillard enveloppe le corps 220 et est enroulé autour du corps formant une superposition de couches de feuillard autour du corps 220.

Le rotor 1 comprend également une pluralité de cales de fermeture 4. Une cale de fermeture 4 de la pluralité de cales de fermeture est en contact avec un enroulement 222 de rotor associé à un corps 220 de pôle et ladite cale de fermeture 4 est configurée pour exercer une pression sur ledit enroulement 222 de rotor en direction dudit corps 220 de pôle. Le terme « en direction » signifie que l'enroulement 222 est positionné en appui contre le corps 220 de pôle par l'action en pression de la cale de fermeture 4. Cette action en pression de la cale de fermeture 4 peut être effectuée, de façon préférentielle, perpendiculairement par rapport à la longueur du corps 220 de pôle, c'est-à-dire perpendiculairement par rapport au premier axe A1 radial ou selon un axe ayant une composante selon un axe perpendiculaire au premier axe A1 radiale et perpendiculaire au deuxième axe A2.

Comme énoncé précédemment, l'enroulement 222 prend la forme d'un feuillard s'enroulant le long du corps 220 de pôle et utilisant ainsi tout le volume disponible autour du corps 220 du pôle 22, à la différence des enroulements filaires selon l'art antérieur. Dès lors, un enroulement 222 en feuillard présente l'avantage d'être plus compact qu'un enroulement de fil de conducteur.

En effet, le contact entre deux zones planaires, à savoir deux zones de l'enroulement 222 du feuillard, s'enroulant l'une autour de l'autre, est parfait. A l'inverse, le contact entre deux zones filaires d'un enroulement filaire selon l'art antérieur se fait uniquement selon un point de contact, libérant alors un volume inaccessible pour le conducteur et donc inapproprié pour l'induction électrique.

En outre, de manière connue, de la chaleur est générée dans les enroulements en raison des pertes ohmiques liées aux courants électriques.

Or, le contact permanent entre deux couches de l'enroulement 222 du feuillard présente également l'avantage de générer un pont thermique parfait entre les deux couches, facilitant le transfert thermique et l'extraction de chaleur vers l'extérieur. A l'inverse, le contact imparfait entre les fils de conducteur d'un enroulement selon l'état de l'art permet à l'air, qui est un isolant thermique, d'occuper le volume disponible entre chaque fil de conducteur, ce qui est un frein à l'extraction thermique en provenance de l'enroulement selon l'état de l'art.

L'enroulement 222 de rotor est préférentiellement un feuillard d'aluminium oxydé. Le feuillard d'aluminium oxydé présente l'avantage d'alléger l'enroulement et donc le pôle 22 du rotor permettant ainsi d'augmenter la vitesse de rotation du pôle 22. De plus, l'oxydation de l'aluminium représente également un avantage en permettant l'isolation électrique entre les différentes couches du feuillard de l'enroulement 222 tout en diminuant la distance entre chaque couche du feuillard de l'enroulement 222 favorisant le pont thermique entre les couches du feuillard de l'enroulement 222. En effet, l'oxydation anodique du feuillard permet de bobiner avec une très faible épaisseur des couches d'isolant, d'environ 8µm, optimisant le remplissage du bobinage par l'enroulement 222 et l'échange thermique.

En variante, l'enroulement 222 de rotor est un feuillard de cuivre. Un feuillard de cuivre présente l'avantage alors d'être un meilleur conducteur électrique en comparaison du feuillard d'aluminium oxydé mais présente également l'inconvénient d'être plus lourd, limitant la vitesse de rotation du rotor.

Comme énoncé précédemment, le rotor 1 comprend une pluralité de cales de fermeture 4. Plus précisément, le rotor 1 comprend un nombre nécessaire de cales de fermeture 4 de sorte à maintenir chaque enroulement 222 contre le corps 220 de pôle affilié audit enroulement 222. Chaque cale de fermeture 4 possède alors une forme favorisant l'appui en pression sur l'enroulement 222 en contact avec ladite cale de fermeture 4 contre le corps 220 de pôle autour duquel se trouve l'enroulement 222. Dès lors, la cale de fermeture 4 peut avoir une forme planaire s'étendant sur la longueur L du corps 220 de pôle et sur la longueur de l'enroulement 222 selon le premier axe A1 et selon le deuxième axe A2.

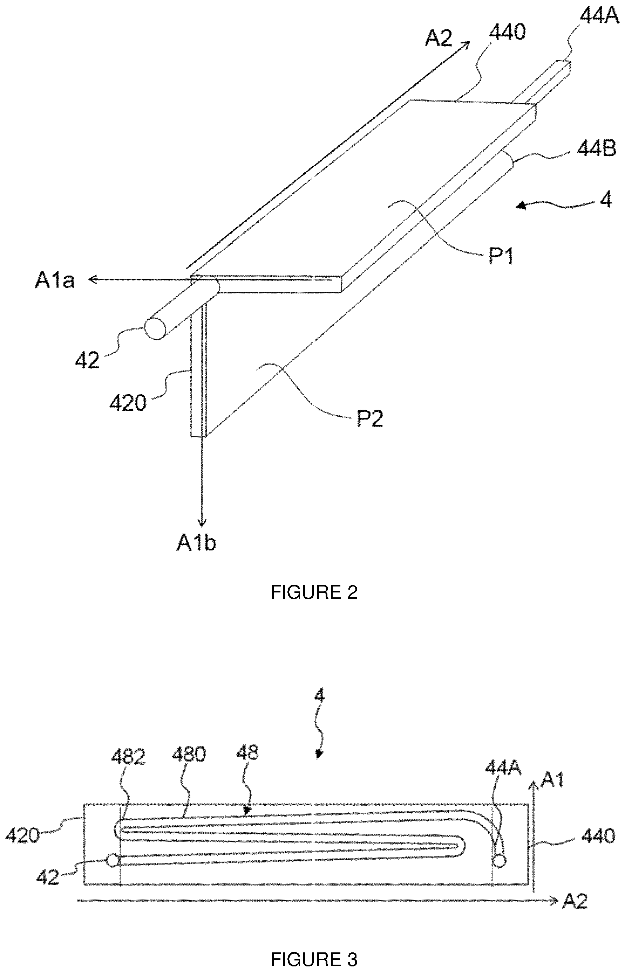

Selon une variante préférentielle, le rotor 1 possède autant de cales de fermeture 4 que de pôles 22. Ainsi, un rotor 1 possédant quatre pôles comprend quatre cales de fermetures 4. Chaque cale de fermeture 4 est en contact avec deux pôles 22 adjacent l'un par rapport à l'autre de sorte à induire une pression sur chaque enroulement 222 en direction de chaque corps 220 de pôle 22. Pour ce faire, la cale de fermeture 4 prend la forme d'un vé, comme représenté en figure 2, s'étendant selon deux plans sécants dont un premier plan P1 des deux plans, qui s'étend parallèlement au premier axe (A1a pour le pôle 22A) et parallèlement au deuxième axe A2, est en contact avec l'enroulement 222A de rotor d'un premier pôle 22A de la pluralité de pôles 22 et dont un deuxième plan P2 des deux plans, qui s'étend également parallèlement au premier axe (A1b pour le contact avec le pôle 22B) et parallèlement au deuxième axe A2, est en contact avec l'enroulement 222B de rotor d'un deuxième pôle 22B de la pluralité de pôles 22, le deuxième pôle 22B étant adjacent au premier pôle 22A, comme représenté en figure 1.

Cette disposition présente l'avantage de réduire le nombre de cales de fermeture 4 et donc de réduire la masse globale des cales de fermeture 4 sur le rotor 1.

En outre, toute forme de la cale de fermeture 4 permettant d'induire une pression sur des enroulements 222 en direction de deux corps 220 de pôles 22 adjacents peut être prise en compte. A titre d'exemple, une cale de fermeture de forme triangulaire peut être considérée si deux faces de la cale de fermeture sont en contact avec deux enroulements de deux pôles 22 adjacents.

Dans la suite de la description, la cale de fermeture 4 est assimilée à un vé 4.

La cale de fermeture 4 est obtenu dans un matériau permettant une bonne conduction de la chaleur afin de d'induire une bonne extraction de la chaleur en provenance des enroulements 222. A titre d'exemple indicatif, la cale de fermeture est obtenue dans un matériau métallique.

L'utilisation d'un vé 4 s'étendant selon deux plans distincts, le premier plan P1 et le deuxième plan P2 permettant un contact parfait entre l'enroulement 222 et l'un des premier plan P1 ou deuxième plan P2 présente l'avantage d'avoir un meilleur refroidissement des enroulements 222 du fait de l'augmentation de la surface d'échange thermique en comparaison de la surface d'échange thermique potentielle des fils d'un enroulement selon l'état de l'art.

De plus, la cale de fermeture 4, représenté en figure 2, comprend :
- une ouverture d'entrée 42 positionnée selon une première extrémité 420 de la cale de fermeture 4 le long du deuxième axe A2,
- une première ouverture d'évacuation 44A positionnée selon une deuxième extrémité 440 de la cale de fermeture 4 le long du deuxième axe A2, différente de la première extrémité 420,
- et une deuxième ouverture d'évacuation 44B positionnée selon la deuxième extrémité 440 de la cale de fermeture 4 le long du deuxième axe A2, de sorte à permettre à un liquide de refroidissement de traverser la cale de fermeture 4 de l'ouverture d'entrée 42 jusqu'à la première ouverture d'évacuation 44A ou jusqu'à la deuxième ouverture d'évacuation 44B et à faciliter l'échange thermique entre l'enroulement 222 et le liquide de refroidissement traversant la cale de fermeture 4. A titre d'exemple indicatif le fluide de refroidissement est un fluide caloporteur, par exemple de l'huile. Néanmoins tout liquide favorisant l'extraction thermique et donc ayant de bonnes caractéristiques thermiques peut être un liquide de refroidissement.

L'ouverture d'entrée 42 est reliée à la première ouverture d'évacuation 44A et à la deuxième ouverture d'évacuation 44B selon un réseau de conduit 48, représenté en figure 3. Le réseau de conduit 48, qui est compris dans le cale de fermeture 4, permet donc de mettre en circulation le fluide de refroidissement dans le cale de fermeture 4.

En outre, l'ouverture d'entrée 42 peut être positionnée aléatoirement selon la première extrémité 420 de la cale de fermeture 4. Ainsi, l'ouverture d'entrée 42 est en contact avec le premier plan P1 des deux plans. Selon une variante, l'ouverture d'entrée 42 est en contact avec le deuxième plan P2 des deux plans. Selon une autre variante préférentielle et représentée en figure 2, l'ouverture d'entrée 42 est en contact avec les deux plans P1 et P2. La première ouverture d'évacuation 44A peut être positionnée aléatoirement selon la deuxième extrémité 440 et est, quant à elle, en contact avec le premier plan P1. La deuxième ouverture d'évacuation 44B peut être positionnée aléatoirement selon la deuxième extrémité 440 et est en contact avec le deuxième plan P2. Selon une variante de l'invention, la première ouverture d'évacuation 44A et la deuxième ouverture d'évacuation 44B sont confondues sur la deuxième extrémité 440.

Selon une variante préférentielle de l'invention, la première ouverture d'évacuation 44A est distincte de la deuxième ouverture d'évacuation 44B.

Selon un aspect préférentiel de l'invention, la distance radiale entre le rotor 1 et l'ouverture d'entrée 42 est supérieure à la distance radiale entre le rotor 1 et la première ouverture d'évacuation 44A. Et, de manière similaire, la distance radiale entre le rotor 1 et l'ouverture d'entrée 42 est supérieure à la distance radiale entre le rotor 1 et la deuxième ouverture d'évacuation 44B.

En outre, le réseau de conduit 48 peut prendre successivement une forme de droite 480 et une forme de courbe 482. La forme globale du réseau de conduit 48 peut être assimilée à une forme de serpentin débutant de l'ouverture d'entrée 42 et aboutissant soit à la première ouverture d'évacuation 44A soit à la deuxième ouverture d'évacuation 44B. De plus, la forme de droite 480 est définie selon une pente *α* inclinée par rapport au deuxième axe A2. Plus précisément, la droite définissant la forme de droite 480 est sécante au deuxième axe A2 selon un angle formant la pente *α.* A titre d'exemple indicatif, la pente *α* est comprise entre 1° et 3°. Le réseau de conduit 48 prend ainsi la forme d'un canal compris à l'intérieur de la cale de refroidissement 4 s'étendant entre la première ouverture d'évacuation 44A et à la deuxième ouverture d'évacuation 44B. La succession de droite et de courbe ainsi que la pente de chaque droite présente ainsi l'avantage de permettre d'optimiser l'écoulement du fluide de refroidissement à l'intérieur de sorte à avoir un débit dans le réseau de conduit 48 important. Dès lors, l'extraction thermique s'en trouve améliorée. Il peut également être envisagé que chaque forme de droite 480 soit définie par une pente *α* spécifique et différente de manière à optimiser davantage l'écoulement.

Ainsi, le positionnement de l'ouverture d'entrée 42 à proximité radiale du rotor couplé à l'éloignement radial de la première ouverture d'évacuation 44A et de la deuxième ouverture d'évacuation 44B, la présence de la pente *α*, associé à la force centrifuge, due à la rotation du rotor 1, permet d'améliorer la circulation, en augmentant le débit, du liquide de refroidissement dans la cale de fermeture 4. Dès lors, avec un débit important du liquide de refroidissement dans la cale de fermeture 4, cette configuration permet d'augmenter la capacité d'extraction de chaleur du vé 4 et, particulièrement du liquide de refroidissement traversant la cale de fermeture 4.

Il est à noter que la figure 3 a pour objet de représenter schématiquement le réseau de conduit 48 afin de montrer sa forme conformément à l'invention revendiquée. Néanmoins, la disposition de l'ouverture d'entrée 42 et celle de la première ouverture d'évacuation 44A dans la figure 3 ne correspond pas à l'invention telle que revendiquée.

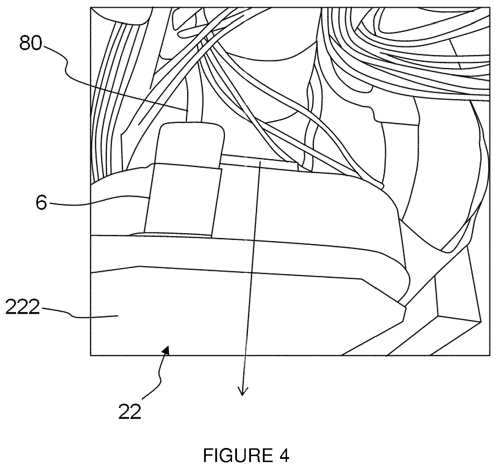

La figure 4 représente une liaison électrique 6 entre un enroulement 222 du pôle 22 et une source d'alimentation électrique 80 de machine électrique tournante. En effet, l'enroulement 222 de rotor du pôle 22 est alors relié électriquement à la source d'alimentation électrique 80 par l'intermédiaire de liaisons électriques 6. De manière générale, la source d'alimentation électrique 80 est en cuivre. Or, l'enroulement 222 est, selon une variante énoncée précédemment, un feuillard en aluminium oxydé. Et la connexion électrique entre un composant en cuivre et un composant en aluminium oxydé est relativement mauvaise.

Dès lors, afin de permettre une bonne connexion électrique entre la source d'alimentation électrique 80 et l'enroulement 222, les liaisons électriques 6 sont obtenues par soudage par pression à froid, soudage par friction-malaxage, brasage par pression ou soudage par pression. A titre d'exemple préférentiel, le soudage par pression à froid est la méthode de connexion entre les liaisons électriques 6 et l'enroulement 222, assurant une continuité électrique entre l'enroulement 222 en feuillard aluminium et la source d'alimentation électrique 80 en cuivre. De plus, ce principe de connexion, à savoir le soudage par pression à froid, est économique. Selon cette méthode de connexion, la source d'alimentation électrique 80 est brasé et ensuite serti avec l'enroulement 222 en feuillard d'aluminium oxydé.

## Revendications

1. Rotor (1) de machine électrique tournante comprenant :
- une pluralité de pôles (22a, 22b) s'étendant chacun selon un premier axe (A1a, A1b) radial par rapport à un axe de rotation du rotor (1) et selon un deuxième axe (A2) parallèle au rotor (1) par rapport à l'axe de rotation du rotor (1), chaque pôle (22) comprenant un corps (220) de pôle,
- un enroulement (222) de rotor par pôle (22), positionné contre le corps (220) du pôle (22), l'enroulement (222) de rotor prenant la forme d'un feuillard s'étendant sur la longueur (L) dudit corps (220) de pôle selon le premier axe (A1) radial enroulé contre le corps (220) de pôle,
- une pluralité de cales de fermeture (4), une cale de fermeture (4) de la pluralité de cales de fermeture (4) ayant la forme d'un vé et étant en contact avec un enroulement
(222) de rotor associé à un corps (220) de pôle, ladite cale de fermeture (4) étant configurée pour exercer une pression sur ledit enroulement (222) de rotor en direction dudit corps (220) de pôle,
**caractérisé en ce que** la cale de fermeture (4) comprend une ouverture d'entrée (42) positionnée selon une première extrémité (420) de la cale de fermeture (4) le long du deuxième axe (A2), une première ouverture d'évacuation (44A) positionnée selon une deuxième extrémité (440) de la cale de fermeture (4) le long du deuxième axe (A2), différente de la première extrémité (420) et une deuxième ouverture d'évacuation (44B) positionnée selon la deuxième extrémité (440) de la cale de fermeture (4) le long du deuxième axe (A2), l'ouverture d'entrée (42) étant reliée à la première ouverture d'évacuation (44A) et à la deuxième ouverture d'évacuation (44B) selon un réseau de conduit (48) destiné à faire circuler un fluide de refroidissement dans la cale de fermeture (4), le réseau de conduit (48) ayant une forme de serpentin et prenant successivement une forme de droite (480) et une forme de courbe (482).

2. Rotor (1) de machine électrique tournante selon la revendication 1, dans lequel l'enroulement (222) de rotor est un feuillard d'aluminium oxydé.

3. Rotor (1) de machine électrique tournante selon la revendication 1, dans lequel l'enroulement (222) de rotor est un feuillard de cuivre.

4. Rotor (1) de machine électrique tournante selon l'une des revendications 1 à 3, dans lequel la cale de fermeture (4) est un vé s'étendant selon deux plans (P1, P2) sécants dont un premier plan (P1) des deux plans est en contact avec l'enroulement (222A) de rotor d'un premier pôle (22A) de la pluralité de pôles (22) et dont un deuxième plan (P2) des deux plans est en contact avec l'enroulement (222B) de rotor d'un deuxième pôle (22B) de la pluralité de pôle (22), le deuxième pôle (22B) étant adjacent au premier pôle (22A).

5. Machine électrique tournante, comprenant le rotor (1) selon l'une quelconque des revendications précédentes, l'enroulement (222) de rotor du pôle (22) étant relié électriquement à une source d'alimentation électrique (80),par l'intermédiaire de liaisons électriques (6), les liaisons électriques (6) étant obtenues par soudage par pression à froid, soudage par friction-malaxage, brasage par pression ou soudage par pression, la source d'alimentation électrique (80) étant en cuivre.

## Patentansprüche

1. Rotor (1) einer rotierenden elektrischen Maschine, umfassend:
- eine Vielzahl von Polen (22a, 22b), die sich jeweils auf einer ersten Achse (A1a, A1b) radial zu einer Drehachse des Rotors (1) und auf einer zweiten Achse (A2) parallel zum Rotor (1) bezogen auf die Drehachse des Rotors (1) erstrecken, wobei jeder Pol (22) einen Körper (220) des Pols umfasst,
- eine Rotorwicklung (222) pro Pol (22), die am Körper (220) des Pols (22) platziert ist, wobei die Rotorwicklung (222) die Form eines Bands aufweist, das sich über die Länge (L) des Körpers (220) des Pols auf der ersten radialen Achse (A1) erstreckt und an den Körper (220) des Pols gewickelt ist,
- eine Vielzahl von Verschlussstücken (4), wobei ein Verschlussstück (4) von der Vielzahl von Verschlussstücken (4) V-förmig ist und eine Rotorwicklung (222) berührt, die einem Körper (220) des Pols zugehörig ist, wobei das Verschlussstück (4) so ausgelegt ist, dass es einen Druck auf die Rotorwicklung (222) in Richtung des Körpers (220) des Pols ausübt,
**dadurch gekennzeichnet, dass** das Verschlussstück (4) eine Eintrittsöffnung (42), die an einem ersten Ende (420) des Verschlussstücks (4) auf der zweiten Achse (A2) platziert ist, eine erste Austrittsöffnung (44A), die an einem zweiten Ende (440) des Verschlussstücks (4) auf der zweiten Achse (A2) platziert ist, das sich vom ersten Ende unterscheidet, und eine zweite Austrittsöffnung (44B) umfasst, die an dem zweiten Ende (440) des Verschlussstücks (4) entlang der zweiten Achse (A2) platziert ist, wobei die Eintrittsöffnung (42) mit der ersten Austrittsöffnung (44A) und der zweiten Austrittsöffnung (44B) über ein Leitungsnetz (48) verbunden ist, in dem ein Kühlfluid in dem Verschlussstück (4) strömen soll, wobei das Leitungsnetz (48) eine Schlangenform aufweist und nacheinander als Gerade (480) und Kurve (482) geformt ist.

2. Rotor (1) einer rotierenden elektrischen Maschine nach Anspruch 1, wobei die Rotorwicklung (222) ein Band aus oxidiertem Aluminium ist.

3. Rotor (1) einer rotierenden elektrischen Maschine nach Anspruch 1, wobei die Rotorwicklung (222) ein Band aus Kupfer ist.

4. Rotor (1) einer rotierenden elektrischen Maschine nach einem der Ansprüche 1 bis 3, wobei das Verschlussstück (4) ein V ist, das sich in zwei Schnittebenen (P1, P2) erstreckt, wobei eine erste Ebene (P1) der beiden Ebenen die Rotorwicklung (222A) von einem ersten Pol (22A) aus der Vielzahl von Polen (22) berührt und wobei eine zweite Ebene (P2) der beiden Ebenen die Rotorwicklung (222B) von einem zweiten Pol (22B) aus der Vielzahl von Polen (22) berührt, wobei der zweite Pol (22B) an den ersten Pol (22A) angrenzt.

5. Rotierende elektrische Maschine, die den Rotor (1) nach einem der vorhergehenden Ansprüche umfasst, wobei die Rotorwicklung (222) des Pols (22) über elektrische Verbindungen (6) elektrisch mit einer Stromquelle (80) verbunden ist, wobei die elektrischen Verbindungen (6) durch Kaltpressschweißen, Reibschweißen, Presslöten oder Pressschweißen erhalten werden, wobei die Stromquelle (80) aus Kupfer ist.

## Claims

1. Rotor (1) for a rotating electrical machine comprising:
- a plurality of poles (22a, 22b) which each extend along a first radial axis (A1a, A1b) relative to a rotation axis of rotation of the rotor (1) and along a second axis (A2) parallel with the rotor (1) relative to the rotation axis of the rotor (1), each pole (22) comprising a pole body (220),
- one rotor winding (222) per pole (22), positioned against the body (220) of the pole (22), the rotor winding (222) being in the form of a strip which extends over the length (L) of the pole body (220) along the first axis (A1) which is radially wound against the pole body (220),
- a plurality of closure wedges (4), a closure wedge (4) from the plurality of closure wedges (4) being in the form of a "V" and being in contact with a rotor winding (222) which is associated with a pole body (220), the closure wedge (4) being configured to apply pressure to the rotor winding (222) in the direction of the pole body (220),
**characterized in that** the closure wedge (4) comprises an inlet opening (42) which is positioned along a first end (420) of the closure wedge (4) along the second axis (A2), a first discharge opening (44A) positioned along a second end (440) of the closure wedge (4) along the second axis (A2), which is different from the first end (420) and a second discharge opening (44B) which is positioned along the second end (440) of the closure wedge (4) along the second axis (A2), the inlet opening (42) being connected to the first discharge opening (44A) and to the second discharge opening (44B) along a conduit network (48) which is intended to circulate a cooling fluid in the closure wedge (4), the conduit network (48) having a serpentine shape and successively assuming a shape of a straight line (480) and a shape of a curve (482).

2. Rotor (1) of a rotating electrical machine according to claim 1, wherein the rotor winding (222) is a strip of oxidized aluminum.

3. Rotor (1) of a rotating electrical machine according to claim 1, wherein the rotor winding (222) is a strip of copper.

4. Rotor (1) of a rotating electrical machine according to any one of claims 1 to 3, wherein the closure wedge (4) is a "V" which extends along two secant planes (P1, P2), of which a first plane (P1) of the two planes is in contact with the rotor winding (222A) of a first pole (22A) of the plurality of poles (22) and of which a second plane (P2) of the two planes is in contact with the rotor winding (222B) of a second pole (22B) of the plurality of poles (22), the second pole (22B) being adjacent to the first pole (22A).

5. Rotating electrical machine comprising the rotor (1) according to any one of the preceding claims, the rotor winding (222) of the pole (22) being electrically connected to an electrical supply source (80), via electrical connections (6), the electrical connections (6) being obtained by means of cold pressure welding, friction stir welding, pressure soldering or pressure welding, the electrical power supply source (80) being made of copper.
